# EUROPÄISCHE PATENTANMELDUNG

(11) **EP 1 743 852 A1**
(43) Veröffentlichungstag der Anmeldung: **17.01.2007**
(21) Anmeldenummer: 05015056.4
(22) Anmeldetag: 12.07.2005
(51) Int. Cl.: B65G 1/137

(54) **Verfahren zur Kommissionierung von Gebinden**

(71) Anmelder: Siemens Schweiz AG, 8047 Zürich (CH)
(72) Erfinder: Losenegger, Beat, 5630 Muri (CH); Tobler, Peter, 6404 Greppen (CH)
(74) Vertreter: Fischer, Michael

(57) **Zusammenfassung**

Erfindungsgemäss ist ein Verfahren zur Kommissionierung von Gebinden (G1 bis G10) zur Bereitstellung einer die Gebinde (G1 bis G10) tragenden Palette für deren Auslieferung an ein vorbestimmtes Ziel vorgesehen,
gekennzeichnet durch die folgenden Schritte:
a) für eingehende Gebinde wird eine artikelspezifische Zuordnung zu einem in eine Anzahl von M separat bedienbaren Zwischenlagern mit einer Anzahl von dynamisch zuordenbaren Gebindelagerplätzen definiert und die Gebinde (G1 bis G10) entsprechend gelagert;
b) für die Palette wird eine zielspezifische Gebindezusammensetzung definiert;
b) für die auf der Palette auszuliefernden Gebinde (G1 bis G10) wird eine zielspezifische Stapelreihenfolge auf der Palette bestimmt;
c) die Gebinde (G1 bis G10) werden entsprechend der zielspezifischen Gebindezusammensetzung und entsprechend der Stapelreihenfolge jeweils bezogen auf die in jedem der M Zwischenlager eingelagerten Gebinde (G1 bis G10) abgezogen und auf je einem dem jeweiligen Zwischenlager zugeordneten Zuführband in ihrer relativen Stapelreihenfolge für das Beladen der Palette an einer Palettenbeladestelle bereitgestellt; und
d) die bereitgestellten Gebinde (G1 bis G10) werden dann entsprechend der für die Palette bestimmten Stapelreihenfolge auf die Palette gestapelt.

## Beschreibung

Die vorliegende Erfindung betrifft ein Verfahren zur Kommissionierung von Gebinden zur Bereitstellung einer die Gebinde tragenden Palette für deren Auslieferung an ein vorbestimmtes Ziel.

Derartige Verfahren sind beispielsweise aus der Kommissionierung von Lebensmitteln bekannt, die beispielsweise individuell für eine Filiale eines Lebensmittelhändler in einem Zentrallager bereitgestellt werden. Sehr häufig werden die Lebensmittel in sogenannten Gebinden angeliefert, also z.B. in kleinen Gitterboxen, in kleinen Kartons, in Kunststofffolie eingepackte Mehrfachpackungen und dergleichen. Üblicherweise werden die angelieferten Gebinde in dem Zentrallager zwischengelagert und später dann gemäss einer vorliegenden Bestellung aus einer bestimmten Filiale auftragsgemäss kommissioniert. Ein hierfür einsetzbares Lager ist beispielsweise aus der europäischen Patentanmeldung EP 1 005 432 A1 bekannt. Ein entsprechender Prozess ist beispielsweise aus der europäischen Patentanmeldung EP 1 346 931 A1 bekannt. Nachteilig ist es bei diesen bekannten Vorrichtungen und Prozessen, dass es nicht möglich ist, die Gebinde in einer Weise zu kommissionieren, dass zum einen ein hoher Gebindedurchsatz erzielt wird und zum anderen ein Einfluss auf die Sortierungsfolge der Gebinde am Zielort genommen werden kann.

Der vorliegenden Erfindung liegt daher die Aufgabe zugrunde, ein Verfahren zur Kommissionierung von Gebinden anzugeben, mit dem sich ein hoher Gebindedurchsatz und zugleich eine Anpassung an die am Zielort vorgesehenen Produktfolge realisieren lässt.

Diese Aufgabe wird bei dem Verfahren der eingangs genannten Art erfindungsgemäss dadurch gelöst, dass die folgende Verfahrensschritte umfasst sind:
a) für eingehende Gebinde wird eine artikelspezifische Zuordnung zu einem in eine Anzahl von M separat bedienbaren Zwischenlagern, die eine individuelle Anzahl von dynamisch zuordenbaren Gebindelagerplätzen aufweisen, definiert und die Gebinde entsprechend gelagert;
b) für den Träger wird eine zielspezifische Gebindezusammensetzung definiert;
b) für die auf dem Träger auszuliefernden Gebinde wird eine zielspezifische Stapelreihenfolge auf dem Träger bestimmt;
c) die Gebinde werden entsprechend der zielspezifischen Gebindezusammensetzung und entsprechend der Stapelreihenfolge jeweils bezogen auf die in jedem der M Zwischenlager eingelagerten Gebinde abgezogen und auf je einem dem jeweiligen Zwischenlager zugeordneten Zuführband in ihrer relativen Stapelreihenfolge für das Beladen des Trägers an einer Trägerbeladestelle bereitgestellt; und
d) die bereitgestellten Gebinde werden dann entsprechend gesteuert von den M Zuführbändern in der für den Träger bestimmten Stapelreihenfolge auf den Träger geschichtet.

Auf diese Weise ist es möglich einen hohen Gebindedurchsatz und gleichseitig eine Stapelung der Gebinde in der Reihenfolge vorzunehmen, wie sie dann beim Entstapeln der Palette am Zielort von Vorteil ist. Ein derartiger Vorteil besteht beispielsweise darin, dass die Reihenfolge auf der Palette der Reihenfolge entspricht, die beim Auffüllen der Regale in einem Geschäft der unmittelbaren Produktreihenfolge entspricht. Auf diese Weise wird es erreicht, dass das Personal die Regale in effizienter Weise auffüllen kann, ohne beispielsweise die Kundschaft mehr als unbedingt nötig beim Einkaufen zu stören.

Zur Erzielung eines besonders hohen Durchsatzes können die Gebinde im Schritt c) für mehrere Paletten gleichzeitig abgezogen werden und an mehreren Zielstellen auf dem jeweils entsprechenden zuführband bereitgestellt werden. Mit anderen Worten heisst dies, dass die pro Palettenbeladestelle eingerichtete Infrastruktur vervielfacht wird, um so mit einem Fahrspiel eines Lifts für das Zwischenlager eine entsprechend hohe Anzahl von Gebinden gleichzeitig abziehen zu können.

Ein besonders intelligente Prozesssteuerung kann es vorsehen, dass mit dem Abziehen der Gebinde im Schritt c) erst begonnen wird, wenn alle für den Träger vorgesehenen Gebinde im Zwischenlager vorhanden sind. Damit werden sogenannte Dead Lock-Zeiten vermieden, die sich nachteilig auf den Durchsatz auswirken würden. Alternativ oder ergänzend dazu kann die Prozesssteuerung aber auch so programmiert sein, dass mit dem Abziehen der Gebinde im Schritt c) begonnen wird, wenn ein Triggerzeitpunkt erreicht worden ist, auch wenn noch nicht alle für den Träger vorgesehenen Gebinde im Zwischenlager vorhanden sind. So kann beispielsweise vermieden werden, dass eine Palette zu spät ausgeliefert wird, was schwerer wiegt als die Tatsache, dass eine Lieferung nicht ganz komplett, aber dafür rechtzeitig an einer Filiale eintrifft.

Weitere vorteilhafte Ausgestaltungen der Erfindugn sind den übrigen Unteransprüche zu entnehmen.

Ausführungsbeispiele der Erfindung werden anhand einer Zeichnung näher erläutert. Dabei zeigen:
- Figur 1: den Materialfluss gemäss dem Verfahren der vorliegenden Erfindung;
- Figur 2: in schematischer perspektivischer Darstellung das Design des Wareneingangs;
- Figur 3: in schematischer perspektivischer Darstellung das Design des Zwischenlagers;
- Figur 4: in schematischer perspektivischer Darstellung das Design des Warenausgangs; und
- Figur 5: schematischer Darstellung die Bereitstellung von Gebinden in einer für eine Zuführbahn definierten Reihenfolge.

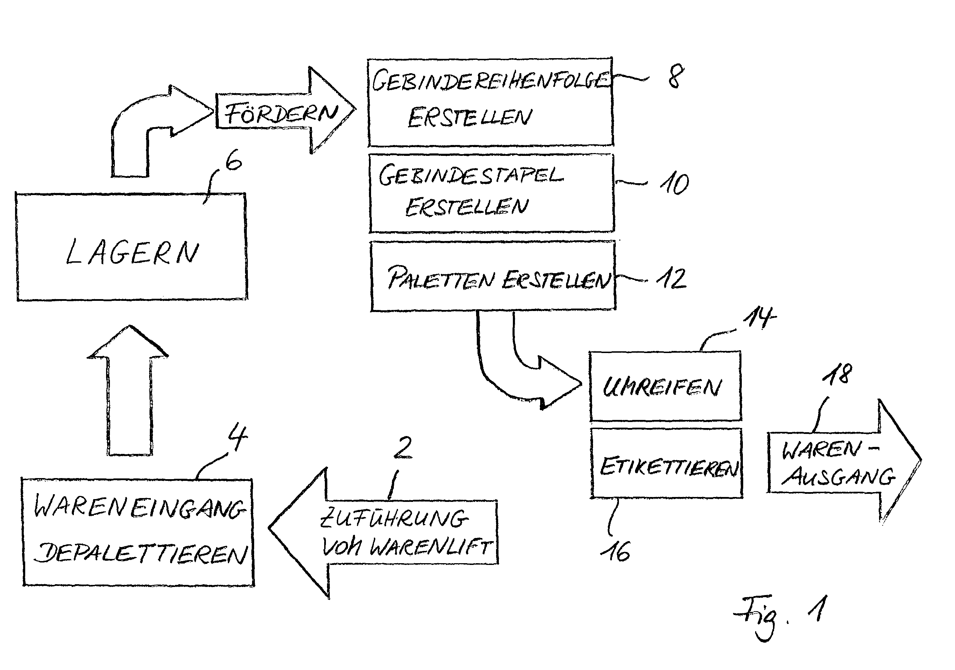

Die Figur 1 zeigt stark vereinfacht den Materialfluss gemäss dem Verfahren der vorliegenden Erfindung. Die eingehenden Waren werden im Schritt 2 mit einem Warenlift zugeführt und im Schritt 4 im Wareneingan depalettiert und nachfolgend im Schritt 6 (zwischen-)gelagert. In Abhängigkeit von der Bestellung wird dann im Schritt 8 eine Gebindereihenfolge erstellt und im Schritt 10 anschliessend ein Gebindestapel entsprechend der zuvor definierten Gebindereihenfolge erstellt. Die Gebindestapel werden dann im Schritt 12 palettiert, im Schritt 14 umreift und im Schritt 16 etikettiert. Die Paletten stehen dann im Schritt 18 am Warenausgang zum Abtransport bereit.

Figur 2 zeigt in schematischer perspektivischer Ansicht das Design des Wareneingangs, bei dem Gebinde G auf Paletten P angeliefert werden. Die auf einer Palette angelieferten Gebinde G können alle dieselben Produkte enthalten; es können sich aber auf einer Palette P auf vollkommen verschiedene Produkte befinden, wobei sich innerhalb eines Gebindes G grundsätzlich identische Produkte befinden. Über die in der Figur 2 darstellten Lifte und Bändern (hier nicht weiter mit Bezugszeichen versehen, da selbsterklärend) werden die Gebinde G in Gebindelagerplätzen LP1 bis LPn in Zwischenlagern L1, L2 usw. eingelagert, wobei der Prozesssteuerung zur jeder Zeit bekannt ist, an welchem Ort sich ein bestimmtes Gebinde G befindet. Dabei wird per Definition eine bestimmte Anzahl von verschiedenen Produkten auf eine festgelegte maximale Anzahl von Zwischenlagern L1, L2 usw. verteilt. Vorliegend sind dies jeweils Gruppen von je drei Zwischenlagern. Es kann aber auch eine andere beliebige Anzahl sein. Eine wichtige Randbedingung besteht dabei sehr wohl in der erforderlichen Durchsatzrate für die Gebinde G und/oder in der Anzahl der eintreffenden Gebinde G der für eine Gruppe von Zwischenlagern definierten Produkte.

Figur 3 zeigt entsprechend in schematischer perspektivischer Darstellung einen Ausschnitt aus dem Lager L mit seinen einzelnen Zwischenlagern L1 bis L6, wobei die Zwischenlager L1 und L2 in dem gezeigten Ausschnitt nicht erkennbar sind. Jedes Zwischenlager L1 bis L6 verfügt über einen Mittelgang, in dem ein Transportaufzug T1 bis T6 für die Gebinde G angeordnet ist. Diese Transportaufzüge T1 bis T6 können in dem gezeigten Auführungsbeispiel bis zu acht Gebinde G (vier in einer Reihe, zwei übereinander) gleichzeitig befördern, d.h. gleichzeitig in einen Gebindelagerplatz LP1 bis LPn einlagern oder gleichzeitig aus einem Gebindelagerplatz abziehen. Für den Transport von abgezogenen Gebinden G sind im vorliegenden Ausführungsbeispiel drei Auslagerbahnen 30, 32, 34 vorgesehen, die in zweckmässiger Weise einer Gruppe von Zwischenlagern zugewiesen sein können. Es wäre alternativ aber auch möglich nur eine einzige Auslagerbahn vorzusehen, die jedoch dann im Bereich des Warenausgangs über Weichen verfügen muss, damit die Gebinde G auf verschiedene Bereitstellbahnen B1 bis B18 (vgl. Fig. 4) in der vorgesehenen Reihenfolge ausgelagert werden können.

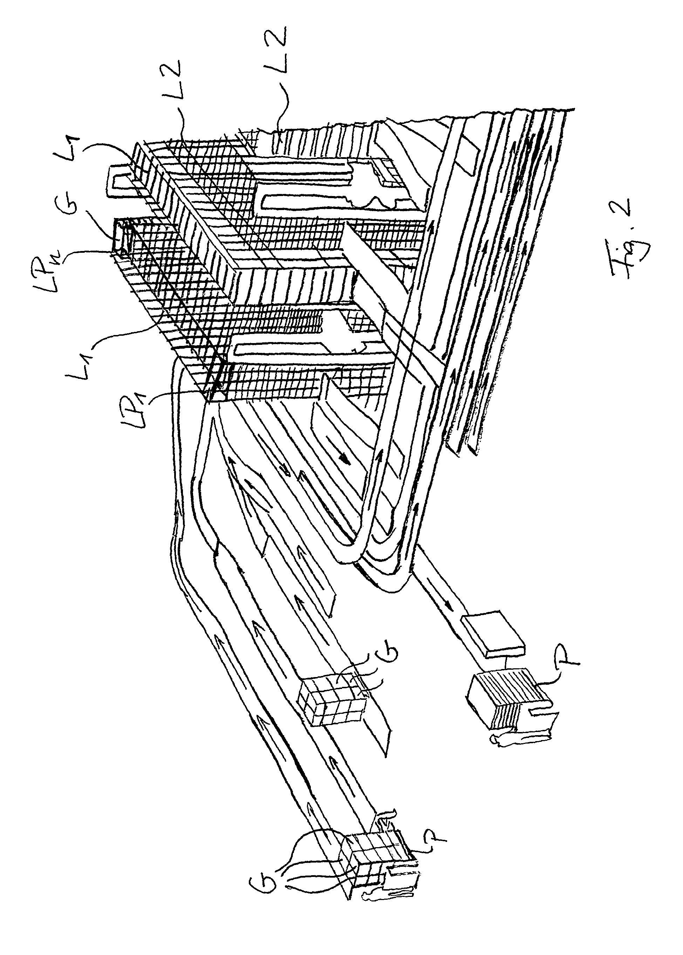

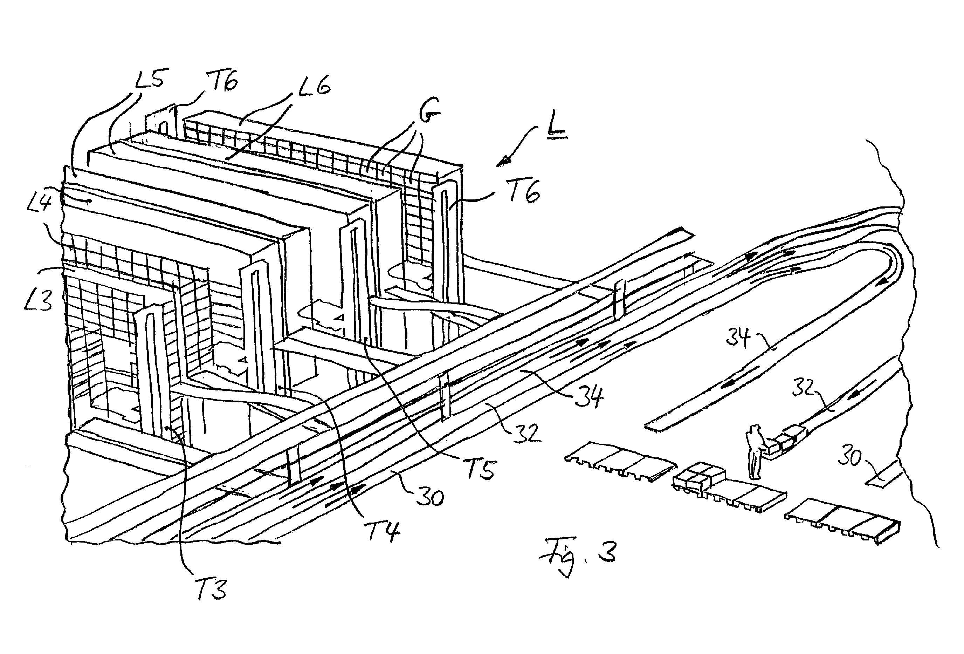

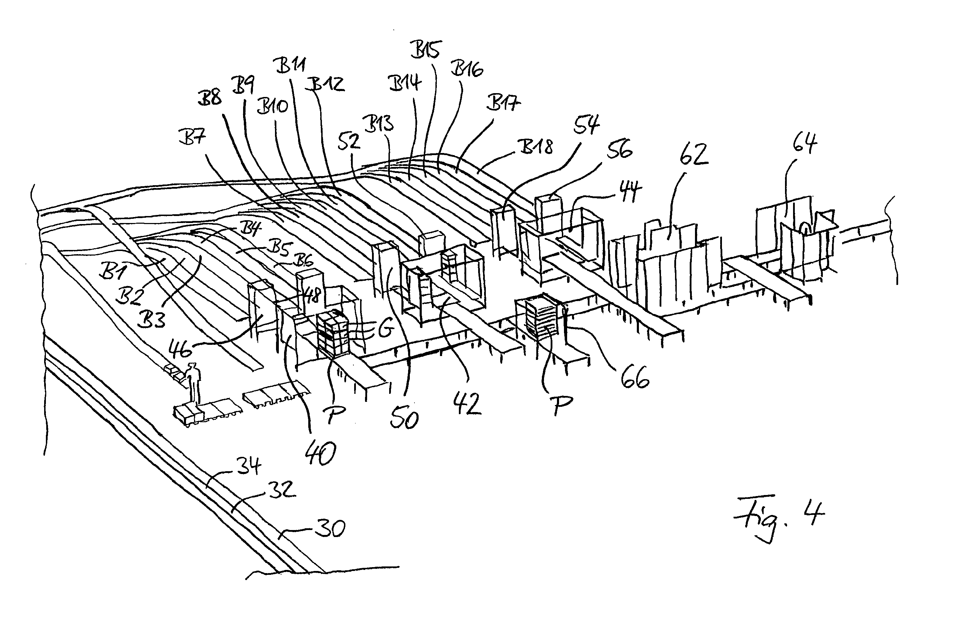

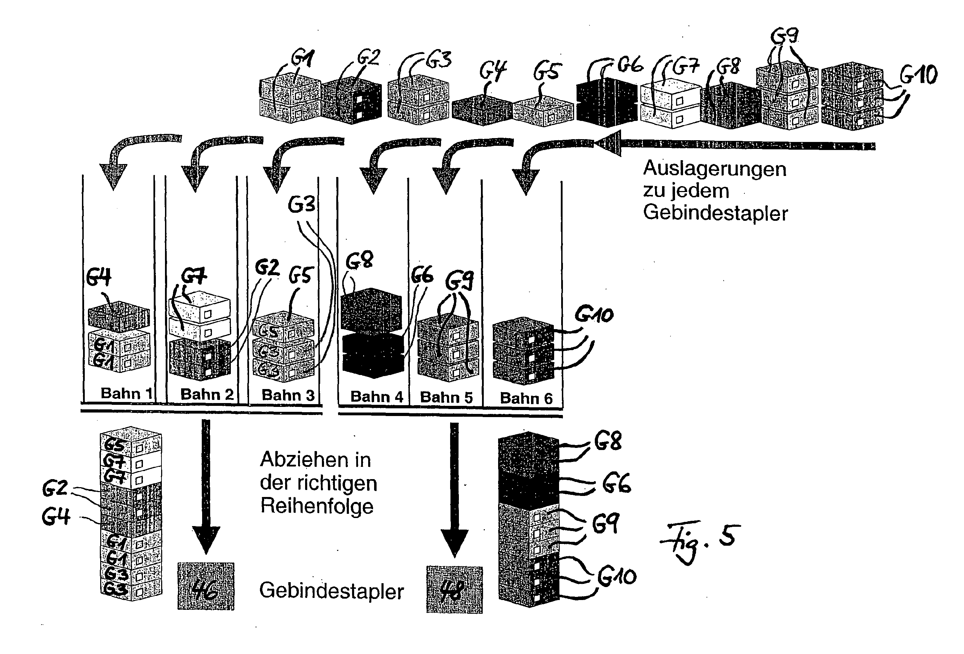

Figur 4 zeigt entsprechend in schematischer perspektivischer Darstellung das Design des Warenausgangs, der im Ausführungsbeispiel drei Palettenbeladestellen 40, 42, 44 umfasst, denen jeweils zwei Stapelbildner 46 bis 56 zum beidseitigen Beschicken einer Palette P zugeordnet sind. Dabei werden die Gebinde G, die aus den zwischenlagern L1 bis L3 abgezogen worden sind, auf Bereitstellungsbändern B1 bis B3 bzw. B7 bis B9 bzw. B13 bis B15 an die Stapelbildner 46 bzw. 50 bzw. 54 herangeführt und zwar pro Bereitstellungsband relativ zueinander in der für die Palette vorgesehenen Reihenfolge der Gebinde bezogen auf die jeweils in einem der drei Zwischenlager L1 bis L3 gelagerten Gebinde, was zu Figur 5 noch näher erläutert werden wird. Entsprechend gilt dies für die Stapelbildner 48, 52, 56 mit den zugehörigen Bereitstellungsbändern B4 bis B6 bzw. B10 bis B12 bzw. B16 bis B18 und die vorgelagerten Zwischenlagern L4 bzw. L5 bzw. L6. Nachdem eine Palette P gefüllt ist, kann sie mit einem Gabelstapler bei 60 entnommen werden oder einer Umreifunsmaschine 62 und einem nachfolgenden Etikettierer 64 zugeführt und dann abtransportiert werden. Neue Leerpaletten können einem Leerpalettenstapel 66 entnommen werden. Ausserdem ist es auch möglich, bei 68 Gebinde G von Hand auf Paletten P zu stapeln.

Figur 5 zeigt nun den eigentlichen Sortiervorgang am Ort der Palettenbeladestellen 40, 42, 44. Auf einer Auslagerbahn 30 werden hier die Gebinde G1 bis G10 in entsprechender Reihenfolge, und zwar nur in Bezug auf die gewünschte Stapelreihenfolge mit Bezug auf ihr jeweiliges Zwischenlager geordnet, herangeführt. Für das Bereitstellungsband B1 bedeutet dies beispielsweise, dass die beiden Gebinde G1 vor dem Gebinde G4 aus dem zwischenlager L1 abgezogen werden mussten. Entsprechend gilt dies für die Bereitstellungsbänder B2, B3 und B4. Die Gebindestapler 46, 48 ziehen dann die Gebinde in der gewünschten Reihenfolge G3-G1-G4-G2-G7-G5 bzw. G10-G9-G6-G8 ab.

## Patentansprüche

1. Verfahren zur Kommissionierung von Gebinden (G, G1 bis G10) zur Bereitstellung einer die Gebinde (G, G1 bis G10) tragenden Palette (P) für deren Auslieferung an ein vorbestimmtes Ziel,
**gekennzeichnet durch** die folgenden Schritte:
a) für eingehende Gebinde (G) wird eine artikelspezifische Zuordnung zu einem in eine Anzahl von M separat bedienbaren Zwischenlagern (L1 bis L6) mit einer Anzahl von dynamisch zuordenbaren Gebindelagerplätzen (LP1 bis LPn) definiert und die Gebinde (G, G1 bis G10) entsprechend gelagert;
b) für die Palette (P) wird eine zielspezifische Gebindezusammensetzung definiert;
b) für die auf der Palette (P) auszuliefernden Gebinde (G, G1 bis G10) wird eine zielspezifische Stapelreihenfolge auf der Palette (P) bestimmt;
c) die Gebinde (G, G1 bis G10) werden entsprechend der zielspezifischen Gebindezusammensetzung und entsprechend der Stapelreihenfolge jeweils bezogen auf die in jedem der M Zwischenlager (L1 bis L6) eingelagerten Gebinde (G, G1 bis G10) abgezogen und auf je einem dem jeweiligen Zwischenlager zugeordneten Zuführband (B1 bis B18) in ihrer relativen Stapelreihenfolge für das Beladen der Palette (P) an einer Palettenbeladestelle (40, 42, 44) bereitgestellt; und
d) die bereitgestellten Gebinde (G1 bis G10) werden dann entsprechend der für die Palette (P) bestimmten Stapelreihenfolge auf die Palette (P) gestapelt.

2. Verfahren nach Anspruch 1,
**dadurch gekennzeichnet, dass**
die Gebinde (G, G1 bis G10) im Schritt c) für mehrere Paletten (P) gleichzeitig abgezogen werden und an mehreren Palettenbeladestellen (40, 42, 44) auf dem jeweils entsprechenden Zuführband (B1 bis B18) bereitgestellt werden.

3. Verfahren nach Anspruch 1 oder 2,
**dadurch gekennzeichnet, dass**
mit dem Abziehen der Gebinde (G, G1 bis G10) im Schritt c) erst begonnen wird, wenn alle für die Palette (P) vorgesehenen Gebinde (G, G1 bis G10) im Zwischenlager (L1 bis L6) vorhanden sind.

4. Verfahren nach Anspruch 1 oder 2,
**dadurch gekennzeichnet, dass**
mit dem Abziehen der Gebinde (G, G1 bis G10) im Schritt c) begonnen wird, wenn ein Triggerzeitpunkt erreicht worden ist, auch wenn noch nicht alle für die Palette (P) vorgesehenen Gebinde (G, G1 bis G10) im Zwischenlager (L1 bis L6) vorhanden sind.
